# EUROPÄISCHE PATENTANMELDUNG

(11) **EP 2 511 522 A1**
(43) Veröffentlichungstag der Anmeldung: **17.10.2012**
(21) Anmeldenummer: 11003033.5
(22) Anmeldetag: 11.04.2011
(51) Int. Cl.: F03D 7/02, G01B 11/16

(54) **Blattwinkelsteuerung für ein Rotorblatt einer Windkraftanlage**

(71) Anmelder: Baumer Innotec AG, 8500 Frauenfeld (CH)
(72) Erfinder: Weigel, Michael, 88142 Wasserburg (DE); Tiedeke, Joachim, 8280 Kreuzlingen (CH)
(74) Vertreter: Strauss, Steffen

(57) **Zusammenfassung**

Blattwinkelsteuerung für ein Rotorblatt einer Windkraftanlage, mit einem Aktor zum Einstellen eines Blattwinkels des Rotorblattes, wobei zur Einstellung des Blattwinkels das Rotorblatt mittels des Aktors um seine Längsachse drehbar ist, einer Messeinrichtung zum Erfassen einer auf das Rotorblatt wirkenden Windlast, sowie einer Steuerungseinrichtung, die mit dem Aktor und der Messeinrichtung verbunden ist, wobei die Messeinrichtung eine Sende- und Empfangseinheit zum Erfassen einer Verformung des Rotorblattes umfasst und die Steuerungseinrichtung dazu ausgebildet ist, den Aktor in Abhängigkeit von der erfassten Verformung zu steuern.

## Beschreibung

Die Erfindung betrifft eine Blattwinkelsteuerung eines Rotorblattes einer Windkraftanlage. Moderne Windkraftanlagen umfassen einen Turm und eine auf dem Turm drehbar gelagerten Gondel mit einem Rotor. Der Rotor umfasst in der Regel mehrere Rotorblätter. Derartige Windkraftanlagen haben heutzutage Rotordurchmesser von bis zu 130 m. Ein hoher Wirkungsgrad, eine minimale Schallemission, ein geringer Materialeinsatz und eine hohe Lebensdauer sind die Kriterien für die Konzipierung und Optimierung von solchen Rotoren. Die Anzahl der Rotorblätter ist für den energetischen Wirkungsgrad einer Windkraftanlage nahezu unbedeutend. Je weniger Blätter eingesetzt werden, desto höher ist die Drehzahl der Anlage, um in gleicher Zeit die gleiche Fläche nutzen zu können. Zur Rotorachse hin sind die Rotorblätter meist als Holmverbindung ohne aktive Fläche konstruiert, da das Verhältnis zwischen Nutzen (in Bezug auf den Hebelarm und die Strömungsfläche) und Konstruktionsaufwand deutlich ungünstiger wird. Moderne Rotorblatter werden in der Regel aus glasfaser- oder kohlenstofffaserverstärktem Kunststoff (GFK bzw. CFK) gefertigt.

Bei einer herkömmlichen Anlage mit Blattwinkelsteuerung misst ein elektronischer Regler ständig die Leistungsabgabe der Anlage. Wenn diese zu hoch ist, wird einem Blattverstellmechanismus ein Kommando geschickt, damit dieser die Rotorblätter sofort leicht aus dem Wind dreht. Umgekehrt werden die Rotorblätter in den Wind gedreht, wenn der Wind wieder nachlässt. Der Blattwinkel wird eingestellt, indem die Rotorblätter um Ihre Längsachse gedreht werden. Die Steuerung verstellt die Rotorblätter, wenn sich die Windgeschwindigkeit ändert. So wird sichergestellt, dass die Rotorblätter immer im richtigen Winkel stehen, um bei allen Windgeschwindigkeiten das Maximum der Windenergie umzusetzen.

Damit die Windkraftanlage besonders effizient betrieben werden kann, kommt es darauf an, eine möglichste exakte Steuerung des Blattwinkels zu ermöglichen.

Es ist daher Aufgabe der Erfindung, eine möglichst effiziente Blattwinkelsteuerung für eine Windkraftanlage bereitzustellen.

Die Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Die erfindungsgemäße Blattwinkelsteuerung für ein Rotorblatt einer Windkraftanlage umfasst einen Aktor zum Einstellen eines Blattwinkels des Rotorblattes, wobei zur Einstellung des Blattwinkels das Rotorblatt mittels des Aktors um seine Längsachse drehbar ist, sowie eine Messeinrichtung zum Erfassen einer auf das Rotorblatt wirkenden Windtast, sowie eine Steuerungseinrichtung, die mit dem Aktor und der Messeinrichtung verbunden ist.
Die Messeinrichtung umfasst ferner eine Sende- und Empfangseinheit zum Erfassen einer Verformung des Rotorblattes. Die Steuerungseinrichtung ist ferner ausgebildet, den Aktor in Abhängigkeit von der von der Messeinrichtung erfassten Verformung zu steuern.
Die Messeinrichtung kann weiterhin dazu ausgebildet sein, die Windlast des auf das Rotorblatt einwirkenden Windes in Abhängigkeit von einer Position des Rotorblattes zu ermitteln.

Mit dieser Anordnung ist entsprechend ein Verfahren zur Blattwinkelsteuerung eines Rotorblatts einer Windkraftantage durchführbar, bei welcher zur Einstellung des Blattwinkels das Rotorblatt mittels eines Aktors um seine Längsachse drehbar ist, und die folgenden Schritte durchgeführt werden:
- eine Messeinrichtung erfasst die Verformung des Rotorblattes unter einer einwirkenden Windlast und
- eine Steuerungseinrichtung steuert den Aktor in Abhängigkeit von der erfassten Verformung, so dass der Blattwinkel des Rotorblatts in Abhängigkeit von der einwirkenden Windlast eingestellt wird.

Um den Blattwinkels anhand der erfassten Verformung zu steuern, kann in der Steuerungseinrichtung und/ oder in der Messeinrichtung eine Einrichtung zum Bereitstellen einer entsprechenden Kennlinie umfasst sein. Diese Einrichtung kann insbesondere ein Speicher sein, in welchem die Kennlinie abgespeichert ist.

Die Erfindung beruht auf der Erkenntnis, dass sich die Windverhältnisse innerhalb einer vollen Umdrehung eines Rotorblattes signifikant ändern.
Moderne Windkraftanlagen umfassen Rotorblätter deren Rotorblattlänge in der Größenordnung von ca. 30 m oder größer seien kann. Die Windgeschwindigkeit ist in der Regel abhängig von der Höhe über dem Erdboden. In Bodennähe sind die Winde in der Regel turbulenter. Die Windgeschwindigkeit wächst regelmäßig mit der Höhe über dem Erdboden. Dle gewaltigen Ausmaße der Rotorblätter haben zur Folge, dass die auf die Rotorblätter einwirkende Windgeschwindigkeit abhängig von der Position der Rotorblätter ist. Ist das Rotorblatt zum Boden hin gerichtet, so wirken auf das Rotorblatt in der Regel geringere Windgeschwindigkelten als ein vom Erdboden weg gerichtetes Rotorblatt.

Herkömmliche Blattwinkelsteuerungen ermitteln lediglich die Windgeschwindigkeit und/oder Rotordrehzahl in Gondelhöhe. Damit können
aber die unterschiedlichen Windverhältnisse bei der Steuerung des Blattwinkels nicht berücksichtigt werden. Die erfindungsgemäße Messeinrichtung ist aber dazu ausgebildet, die Windgeschwindigkeit des auf das Rotorblatt einwirkenden Windes in Abhängigkeit von einer Position des Rotorblattes zu ermitteln. Ändern sich die Windverhältnisse In Abhängigkeit von der Position des Rotorblattes, so können diese Änderung bei der Steuerung des Blattwinkels berücksichtigt werden. Die erfindungsgemäße Blattwinkelsteuerung ermöglicht deshalb, den Blattwinkel exakter und direkt in Ansprechen auf die auftretenden Belastungen des Rotorblatts zu steuern. Damit kann der Wirkungsgrad der Windkraftanlage insgesamt optimiert werden. Dies gilt insbesondere dann, wenn Jedes der Rotorblätter der
Windkraftanlage eine erfindungsgemäße Blattwinkelsteuerung aufweist und jedes der Rotorblätter vom jeweiligen Aktor der Blattwinkelsteuerung individuell abhängig von der gemessenen Verformung eingestellt wird. Demgemäß ist in Weiterbildung der Erfindung vorgesehen, dass die Verformungen mehrerer jeweils mit eigenen Aktoren ausgestatteten Rotorblättern einer Windanlage unabhängig voneinander durch mitrotierende Messeinrichtungen erfasst und die Blattwinkel abhängig von der gemessenen Verformung durch die Aktoren eingestellt werden.

Die Verformung des Rotorblattes ist ein Maß für die jeweils auf das Rotorblatt wirkende Windlast. Ändern sich die Windverhältnisse in Abhängigkeit von der Position des Rotorblattes, so ändert sich dementsprechend die Verformung des Rotorblattes. Das gemessene Signal ermöglicht folglich eine exaktere Messung der relevanten Windverhältnisse in Abhängigkeit von einer Position des Rotorblattes. Ein weiterer Vorteil dieses Messverfahrens ist, dass die ermittelte Windlast automatisch mit der aktuellen Position des Rotorblattes im Winde korreliert ist.

Eine bevorzugte Ausführungsform der vorliegenden Erfindung sieht vor, dass die Messeinrichtung dazu ausgebildet ist, die Windlast, beziehungsweise die daraus resultierende Verformung des Rotorblatts mehrfach während eines Umlaufs des Rotorbfattes zu erfassen. Damit kann die Steuerung des Rotorblattwinkels auf Änderungen der Windgeschwindigkeit während eines Umlaufs des Rotorblattes reagieren. Vorzugsweise werden dazu die Steuerungseinrichtung, die Messeinrichtung und der Aktor so ausgelegt, dass die Einstellzeit zur Einstellung des von der Steuerungseinrichtung ermittelten Blattwinkels höchstens ein Viertel, besonders bevorzugt höchstens ein Achtel der Umlaufzeit des Rotorblatts betragen. Im Allgemeinen weist der Aktor dabei die größte Trägheit auf und wird daher vorzugsweise so ausgelegt, dass eine entsprechende Stellzeit erzielbar ist.

Es ist besonders günstig, die Verformung mittels einer am oder im Rotorblatt mitrotierenden Messeinrichtung optisch zu erfassen. Dabei ist eine Markierung am Rotorblatt angeordnet, weiche entfernt zur optischen Messeinrichtung angeordnet ist. Auf der Messeinnchtung wird die Markierung mittels einer Optik abgebildet. Verformt sich das Rotorblatt, so verschiebt sich entsprechend auch die Markierung innerhalb des Bildfelds der Messeinrichtung. Damit ändert sich auch der Ort der Abbildung. Die Verformung kann nun leicht anhand des Abstandes der aktuellen Abbildung der Markierung zu einer Referenzposition ermittelt werden.

Besonders einfach ist die Montage eines derartigen Meßsystems, wenn die Markierung durch eine von der Markierung beabstandet angeordnete Beleuchtungsquelle beleuchtet wird. Insbesondere ist es dabei günstig, die Beleuchtungsquelle, nachfolgend auch als Sendeeinheit bezeichnet, in der Nähe der Empfangseinheit anzuordnen.

Demgemäß sieht die Erfindung eine Sendeeinheit vor, mittels welcher Strahlung, vorzugsweise Licht in Längsrichtung des Rotorblattes aussendbar ist. Zudem ist ein am oder im Rotorblatt befestigtes, von der Sendeeinheit beabstandetes Reflektionsmittel in Form einer die Strahlung reflektierenden Markierung vorgesehen. Die Messeinrichtung umfasst weiterhin eine abbildende, ortsauflösende Empfangseinheit, wobei die Strahlung ausgehend von der Sendeeinheit einem Strahlengang folgend von dem Reflektionsmittel zur Empfangseinheit reflektterbar ist Der Strahlengang wird bei einer Verformung des Rotorblattes verändert. Mittels der Empfangseinheit ist die Veränderung des Strahlengangs detektierbar und ein Messwert daraus ableitbar. Insbesondere ist die Positionsänderung der Markierung anhand der Änderung der Position der Abbildung in der Empfangseinheit ableitbar.

Besonders geeignet als Empfangseinheit ist dazu ein Matrixsensor mit einer Optik, welche die Markierung auf dem Matrixsensor abbildet. Als Matrixsensor kann dabei auch ein Zeilensensor dienen, der im Sinne der Erfindung als Matrixsensor mit nur einer Zeile aufgefasst wird.

Bei einer Positionsänderung des Reflektionsmittels relativ zur Sende- und/oder Empfangseinheit, wie sie bei einer Verformung des Rotorblattes aufkritt, verändert sich entsprechend der Ort der Abbildung des Reflexionsmittels auf der Empfangseinheit der Messeinrichtung. Mit der Erfassung dieser Veränderung mittels der Empfangseinheit kann auf einfach zu realisierendem Wege auf die Biegung des Rotorblattes selbst und auch auf das Ausmaß der Verformung geschlossen werden.

Günstig ist es weiterhin, wenn mittels der Sendeeinheit die Strahlung gepulst aussendbar ist. Somit wird die Lebensdauer der Quelle bedeutend verlängert und Umgebungseinflüsse reduziert.

Es ist von Vorteil, wenn mittels der Sendeeinheit gerichtete Strahlung aussendbar ist. Dabei ist gewährleistet, dass genügend Strahlungsintensität für die Detektion vorhanden ist. Allerdings wird die Strahlung nicht in Form eines räumlich begrenzten Laserstrahls auf das Reflexionsmittel gerichtet. Dies würde dazu führen, dass das Reflexionsmittel nicht vollständig vom Lichtstrahl ausgeleuchtet wird. Vielmehr ist eine das Reflexionsmittel flächig beleuchtende, oder mit anderen Worten vollständig ausleuchtende Strahlungsquelle vorgesehen. Im Allgemeinen wird mindestens das ganze von der Empfangseinheit erfasste Sichtfeld beleuchtet. Würde ein Laserstrahl verwendet, welcher auf dem Reflexionsmittel nur einen einzelnen Punkt beleuchtet, so wäre anhand der Abbildung eine Ortsveränderung nicht ohne weiteres feststellbar.

In einer weiteren vorteilhaften Ausführung der erfindungsgemässen Rotorblattsteuerung ist das Rotorblatt in wenigstens zwei Segmente unterteilt, wobei jedes der wenigstens zwei Segmente von wenigstens einem Aktor bewegbar ist und der Aktor zur Einstellung des Blattwinkels von der Steuerungseinrichtung aktivierbar ist. Somit kann für jedes der wenigstens zwei Segmente des Rotorblattes eine optimale Stellung des Rotorblattwinkels erreicht werden.

Die Erfindung wird nachfolgend anhand von Ausführungsbeispielen und unter Bezugnahme auf die Zeichnungen näher erläutert. Dabei verweisen gleiche Bezugszeichen auf gleiche oder entsprechende Elemente. Die Merkmale verschiedener Ausführungsbeispiele können miteinander kombiniert werden. Es zeigen:
Figur 1a eine Windkraftanlage mit einer Rotorblattwinkelsteuerung gemäß einem ersten Ausführungsbeispiel der vorliegenden Erfindung,
Figur 1b eine Windkraftanlage mit einer Rotorblattwinkelsteuerung gemäß einem zweiten Ausführungsbeispiel der vorliegenden Erfindung.
Figur 2 ein Koordinatensystem, in dem die Höhe über dem Erdboden gegen die Windgeschwindigkeit aufgetragen ist,
Figur 3 eine schematische Darstellung von Luftströmungen über dem Erdboden,
Figur 4 ein Profil eines Rotorblatts mit Richtung des Windes und der resultierenden Anströmrichtung,
Figur 5 ein Diagramm, in welchem belspielhaft der Blattwinkel in Abhängigkeit der Windgeschwindigkeit aufgetragen ist,
Figur 6 ein Ausführungsbeispiel des zeitlichen Verlaufs einer gemessenen Verformung und des im Ansprechen auf die gemessene Verformung eingestellten Blattwinkels, und
Figur 7 und Figur 8 Ausführungsbeispiele einer Blattwinkelsteuerung mit individueller Erfassung der Verformung und individueller Einstellung des Blattwinkels für eine Windkraftanlage mit mehreren Rotorblättern.

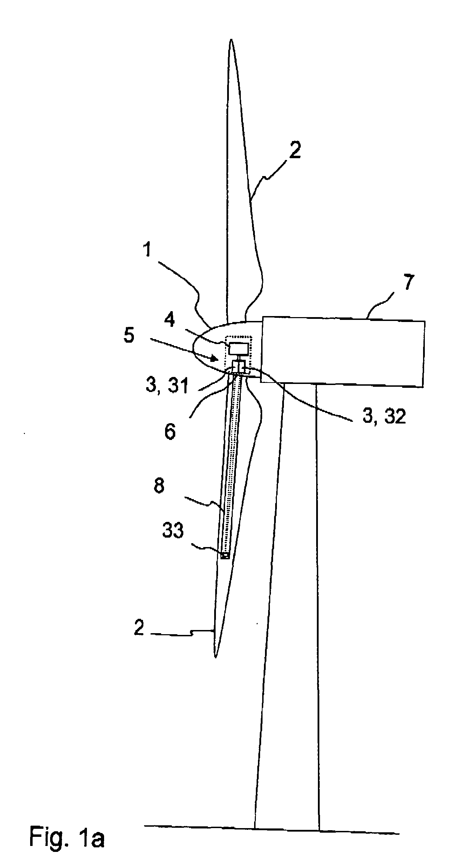

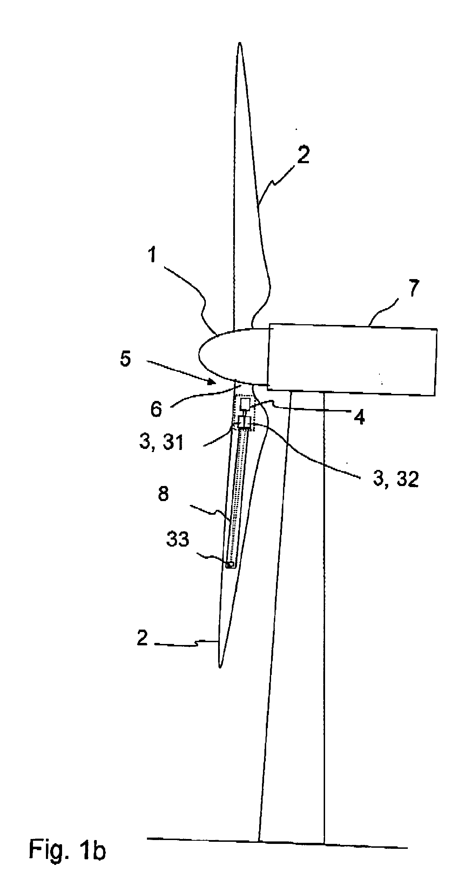

In Figur 1 a ist eine Windkraftanlage mit einem Rotor 9 gemäß dem ersten Ausführungsbeispiel schematisch dargestellt. Die Windkraftanlage weist einen Turm und eine auf dem Turm drehbar gelagerte Gondel 7 auf. Die Drehachse der Gondel 7 fällt in der Regel mit der Längsachse des Turmes zusammen. An der Gondel 7 ist ein drehbar gelagerter Rotor 9 über eine im Wesentlichen horizontal angeordnete Rotorwelle mit der Gondel 7 verbunden. Die Rotationsenergie des Rotors 9 wird dabei über die Rotorwelle an einen innerhalb der Gondel 7 angeordneten Generator zur Energieerzeugung weitergeleitet. Vorzugsweise ist zwischen dem Rotor 9 und dem Generator ein Getriebe angeordnet, um die Umdrehungsgeschwindigkeit des Rotors 9 an einen optimalen Generatorbetrieb anpassen zu können. Der Übersicht halber sind das Getriebe und der Generator nicht dargestellt.

Der Rotor 9 selbst weist eine Nabe 1 und zwei oder mehr an der Nabe 1 befestigte Rotorblätter 2 und eine einem von beiden Rotorblättern 2 zugeordnete Messeinrichtung 3 auf. Schematisch angedeutet sind innerhalb der Nabe 1 eine Sendeeinheit 31 zum Aussenden von Strahlung in Längsrichtung des Rotorblattes 2 und eine Empfangseinheit 32 zum Detektieren von Strahlung vorgesehen. Von der Messeinrichtung 3 und / oder von einer Steuerungseinrichtung 4 ist ein Verformungszustand des Rotorblattes 2 aus den von der Empfangseinheit 32 erzeugten Messwerten bestimmbar.

Sowohl Sendeeinheit 31 als auch die Empfangseinheit 32 sind entlang der Rotorblattachse und damit innerhalb des Rotorblatts 2 angebracht. Innerhalb des Rotorblatts 2 ist schematisch angedeutet ein Reflektionsmittel 44 an der Rotorblattaußenwand angeordnet, welches die von der Sendeeinheit 31 herkommende Strahlung zur Empfangseinheit 32 reflektiert. Die Sendeeinheit 31 und die Empfangseinheit 32 werden von einem vorzugsweise In der Gondel 7 angeordneten Versorgungsmittel mit Energie versorgt Da sich die Nabe 1 relativ zur Gondel 7 dreht, kann die Energieversorgung vorzugsweise über Schleifringkontakte erfolgen (nicht dargestellt).

Ein von der Sendeeinheit 31 ausgesendeter Lichtstrahl oder Laserstrahl gelangt entlang eines Weges 8 zunächst zu dem Reflexionsmittel 33. Bei dem Reflexionsmittel 33 kann es sich um einen Retroreflektor, insbesondere ein Tripelprisma, Tripelspiegel, oder ein Array von Tripelprismen oder Tripelspiegel handeln. Der reflektierte Lichtstrahl gelangt entlang eines Weges 8 zur Empfangseinheit 32. Bei der Empfangseinheit 32 handelt es sich bevorzugt um eine ortsauflösende lichtempfindliche Sensorfläche. Beispielsweise können dazu CCD- oder CMOS-Sensoren vorgesehen sein. Die Empfangseinheit 32 hat eine Sensorfläche, die ungefähr senkrecht zu dem Strahlengang 8 des Lichtstrahles ausgerichtet ist. Bei einem nicht verformten Rotorblatt 2 erfolgt die Abbildung des Reflexionsmittels 32 an einem vorbestimmten normalen Auftreffpunkt. Die Empfangseinheit 32 weist hierzu ein optisches Element zur Abbildung des Reflexionsmittels 33 auf.

Wird der Rotor 9 beispielsweise senkrecht zur Rotationsebene der Rotorblätter 2 verbogen, so ändert sich die Position des Reflexionsmittels 33 entsprechend. Dies hat zur Folge, dass das Bild des Reflexionsmittels 33 an einer anderen Position auf der Sensorfläche der Empfangseinheit 32 entsteht. Der Abstand des Auftreffpunktes auf der Sensorfläche der Empfangseinheit 32 von dem vorgenannten vorbestimmten Punkt ist ein Maß für die Verformung des Rotorblattes 2. Der Ort des Auftreffpunktes auf der Sensorfläche der Empfangseinheit 32 wird kontinuierlich erfasst. Diese Daten werden an die Messeinrichtung 3 übertragen. Aus einem Abstand und einem Winkel und der Kenntnis des Verhaltens des Rotorblatts 2 zum normalen Auftreffpunkt ermittelt die Messeinrichtung 3 und / oder die Steuerungseinrichtung 4 kontinuierlich eine Windlast. Ergänzend kann eine Windstärke auf Gondelhöhe durch ein Windmessgerät, beispielsweise durch einen Flügelradsensor, erfasst werden.

Anhand der erfassten Windlast ermittelt die Steuereinrichtung 4 einen optimierten Sollwert für einen Blattwinkel 48 des Rotorblattes 2. Diese Information wird an den Aktor 6 übertragen, der anschließend den Blattwinkel 48 des Rotorblattes 2 verstellt. Die Erfassung und Auswertung der Windlast erfolgt in kurzen Zeitintervatten, so dass der Blattwinkel 48 auch mehrfach während eines einzelnen Umlaufens des Rotorblattes 2 adaptiert werden kann. Weiterhin beeinflusst die Rotordrehzahl den Anstellwinkel des Profils des Rotorblattes 2 zur Anströmungsrichtung und damit den vom Rotorblatt 2 erzeugten Auftrieb. Eine Drehzahl des Rotorblattes 2 kann daher als zusätzlicher Parameter von der Steuerungseinrichtung 4 verwendet werden, um den günstigsten Blattwinkel 48 zu ermitteln.

Figur 1b zeigt schematisch die Windkraftanlage gemäß dem zweiten Ausführungsbeispiel der vorliegenden Erfindung. Die in Figur 1b dargestellten Bezugszeichen stellen die gleichen Merkmale dar wie in Figur 1a. Im Unterschied zum ersten Ausführungsbeispiel sind jedoch die Messeinrichtung 3 und die Steuerungseinrichtung 4 nicht mehr in der Nabe 1 der Windkraftanlage angeordnet. Stattdessen befindet sich die Messeinrichtung 3 und die Steuerungseinrichtung 4 in oder am Rotorblatt 2 selber.

Bei beiden beispielhaften Ausführungsformen kann insbesondere jedes Rotorblatt 2 eine eigene unabhängige Blattwinkelsteuerung 5 aufweisen, so dass die einzelnen Rotorblätter 2 vollkommen unabhängig voneinander gesteuert werden. Demgemäß ist in Weiterbildung der Erfindung, ohne Beschränkung auf die spezielle, in den Fig. 1a und 1b gezeigte Ausführung vorgesehen, dass die Verformungen mehrerer Rotorblätter 2 einer Windkraftanlage unabhängig voneinander durch mitrotierende Messeinrichtungen 3 erfasst werden, wobei jedes der Rotorblätter 2 mit einem eigenen Aktor 6 eingestellt wird. Dabei kann eine gemeinsame Steuerungseinrichtung 4 vorgesehen sein. Ferner kann auch jedes Rotorblatt 2 eine Steuerungseinrichtung 4 aufweisen.

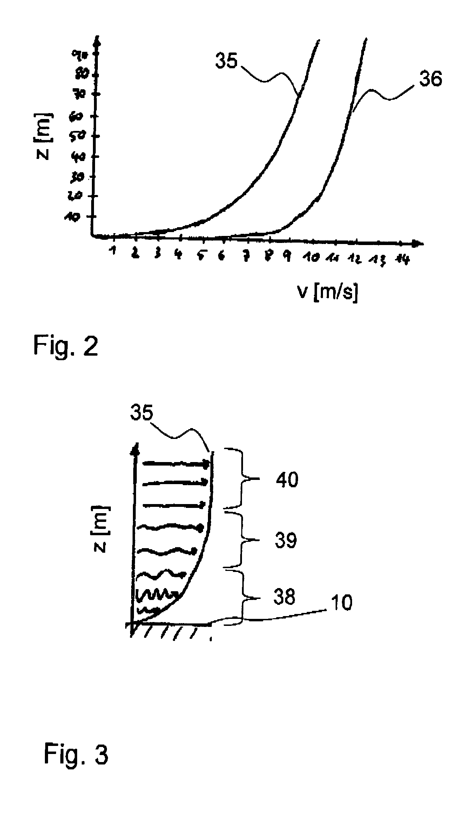

Figur 2 zeigt ein Diagramm, in dem die Höhe z in Metern über dem Erdboden 10 gegen die Windgeschwindigkeit in Metern pro Sekunde aufgetragen ist. Unter Berücksichtigung solcher Geschwindigkeitsprofile lässt sich die Regelung des Blattwinkels 48 (Pitchwinkels) derart verfeinern, dass Informationen über die Windlast und die in Figur 3 verdeutlichte Turbulenz berücksichtigt werden können.

Die Turbulenzen manifestieren sich an Schwingungen des Auftreffpunktes des reflektierten Lichtstrahles auf der Sensoroberfläche der Messeinrichtung 3. Die Regelung kann somit derart verfeinert werden, dass die Effizienz der Windenergie erhöht wird.

In Figur 2 sind zwei Geschwindigkeitsprofile für Wald (Geschwindigkeitsprofil 35) und Wattgebiet (Geschwindigkeitsprofil 36) dargestellt. Die unterschiedlichen Oberflächen und die sich ergebenden Geschwindigkeitsprofile werden dabei durch die Rauhigkeitslänge z₀ charakterisiert. Für das Geschwindigkeitsprofil 35 über einem Waldgebiet beträgt diese Länge typischerweise etwa 1 Meter. Die Oberfläche eines Watts ist selbstverständlich wesentlich glatter. Die Rauhigkeitslänge beträgt hier nur etwa z₀=0,005 Meter, was zu einem deutlich steileren Anstieg der Windgeschwindigkeit 49 mit der Höhe führt. In jedem Fall ist erkennbar, dass die Windgeschwindigkeit 49 in m/s mit zunehmender Höhe ansteigt. Dementsprechend führt der unterschiedliche Abstand der Rotorblätter 2 einer Windkraftanlage über dem Erdboden 10 dazu, dass abhängig vom Drehwinkel des Rotorblatts Winde mit unterschiedlicher Windgeschwindigkeit 49 auf die jeweiligen Rotorblätter 2 wirken.

Figur 3 zeigt ein Diagramm ähnlich zu Figur 2 mit einem Geschwindigkeitsprofil 35. Je größer der Abstand über dem Erboden ist, desto gleichmäßiger ist die Windgeschwindigkeit 49. In Bodennähe werden die Winde umso turbulenter. Vom Erdboden 10 ausgehend Ist ein erster Höhenbereich 38 vorhanden, der auch als bodennahe Grenzschicht bezeichnet wird. In diesem Bereich 38 findet nicht nur eine starke Zunahme der Windgeschwindigkeit 49 mit der Entfernung zum Erdboden 10 statt, sondern diese Zone ist auch von hoher Turbulenz geprägt. Diese Zone reicht typischerweise bis einige Meter über den Erdboden 10. Gegebenenfalls können die Spitzen der Rotorblätter beim Durchlaufen des untersten Punktes der Drehung diese Zone streifen. Dies gilt insbesondere, wenn die Rauhigkeitslänge des Bodens höher ist. An diesen Höhenbereich 38 schließt sich ein weiterer Höhenbereich 39 mit niedrigerer Turbulenz an, der aber ebenfalls noch von einer Zunahme der Windgeschwindigkeit 49 mit steigendem Abstand zum Erdboden 10 geprägt ist. Oberhalb dieser Zone folgt schließlich ein Höhenbereich, der durch geostrophischen Wind charakterisiert ist, wobei keine oder keine wesentliche Zunahme der Windgeschwindigkeit 49 mit ansteigender Entfernung zum Erdboden 10 mehr zu verzeichnen ist. Dieser Bereich 40 liegt allerdings typischerweise oberhalb des Wirkungsbereichs von Windkraftanlagen. Hieran wird deutlich, dass der Höhenbereich, in welchem Windkraftanlagen Energie schöpfen, im Allgemeinen bodennahe Turbulenzen aufweist. Die erfindungsgemäße Blattwinkelsteuerung kann hierbei mit Vorteil auch die Stellung des Blattwinkels 48 an die kurzfristigen, mit den Turbulenzen einhergehenden Windgeschwindigkeits-Änderungen anpassen. Sofern die Änderung der Windgeschwindigkeit 49 nicht schneller ist als die für die Stellung des Rotorblatts 2 mit dem Aktor 6 erforderliche Zeit, werden diese Änderungen der Windgeschwindigkeit 49 aufgrund von turbulenten Luftbewegungen mit der erfindungsgemäßen Vorrichtung automatisch mit berücksichtigt.

Unabhängig von der Turbulenz besteht aber, wie anhand der Fig. 2 und 3 deutlich wird, generell das Problem, dass aufgrund deutlich unterschiedlicher Windgeschwindigkeiten innerhalb der vom Rotorblatt 2 überstrichenen Fläche bei gleichem Blattwinkel 48 aller Rotorblätter 2 ein Anstellwinkel 46 nicht überall optimal gehalten werden kann. Vielmehr kommt es durch die unterschiedlichen Windlasten auch zu starken, zeitliche variierenden Drehmomenten quer zur Rotationsachse, welche die Mechanik der Windkraftanlage belasten. Gerade diese Drehmomente werden durch die unterschiedlichen Windlasten hervorgerufen und können demnach anhand der erfindungsgemäß gemessenen Verformung erfasst werden.

In Weiterbildung der Erfindung ist daher vorgesehen, dass die Blattwinkelsteuerung 5 derart erfolgt, dass der Blattwinkel 48 von der Steuerungseinrichtung 4 unter Ansprechen auf die gemessene Verformung so eingestellt wird, dass die Verformung während eines Umlaufs des Rotorblatts 2 möglichst gleichmäßig bleibt. Dazu kann ein Sollwert der Verformung bereitgestellt oder ermittelt werden, wobei die Steuerungseinrichtung 4 bei einer Verformung, die geringer als der Sollwert ist, den Aktor 6 so steuert, dass der durch den Aktor 6 geänderte Blattwinkel 48 eine höhere Windlast ergibt. Bei einer Verformung, die größer als der Sollwert ist, wird der Blattwinkel 48 über den Aktor 6 so eingestellt, dass der geänderte Blattwinkel 48 eine geringere Windlast ergibt.

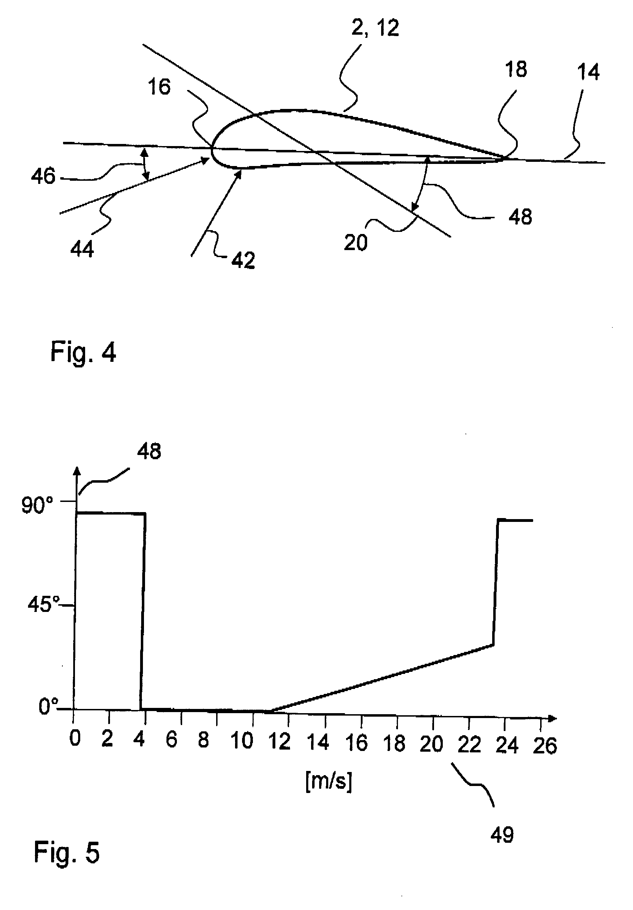

Im Folgenden werden Ausführungsformen für die Steuerung des Blattwinkels 48 durch die Steuerungseinrichtung 4 beschrieben. Zunächst wird dazu auf Fig. 4 Bezug genommen, welche schematisch ein Profil 12 eines Rotorblatts 2 zeigt. Das Profil 12 wird unter anderem durch eine Profilsehne 14 charakterisiert. Diese Profilsehne 14 ist die gedachte Verbindungslinie zwischen einer Profilnase 16 und einer Profilhinterkante 18. Das Rotorblatt 2 rotiert in einer Rotationsebene 20, wobei die Rotationsachse im ldealfall parallel zu einer Windrichtung 42 steht. Die tatsächliche Windrichtung 42 unterscheidet sich aufgrund der Bewegung des Rotorblatts 2 von einer Anströmrichtung 44, unter welcher der Wind auf das Profil 12 des Rotorblatts 2 trifft. Die zusätzliche Geschwindigkeitskomponente aufgrund der Rotationsbewegung des Rotorblatts 2 führt dabei dazu, dass die Anströmrichtung 44 gegenüber der tatsächlichen Windrichtung 42 mehr in Richtung zur Proflsehne 14 geneigt ist.

Der Winkel zwischen der Rotationsebene 20 und der Profilsehne 14 wird im Folgenden als Blattwinkel 48 bezeichnet. Ein Winkel 46 zwischen einer Anströmrichtung 44 und der Profilsehne 14 ist der Anstellwinkel.

Anhand der Darstellung der Fig. 4 ist ersichtlich, dass ein größerer Blattwinkel 48 zu einem kleineren Anstellwinkel 46 führt. Ein kleinerer Anstellwinkel 46 führt zu einem kleineren Auftrieb des Rotorblatts 2 und damit zu einem geringeren Drehmoment in axialer Richtung der Rotation. Ein Anstellwinkel von 0° wird als sogenannte Fahnenstellung bezeichnet. In dieser Stellung verschwindet das Drehmoment in axialer Richtung und das Rotorblatt 2 kommt zum Stillstand. Gemäß einer Weiterbildung der Erfindung kann nun die Steuereinrichtung 4 so eingerichtet sein, dass im Falle der kurzfristigen oder über einen vorbestimmten Zeitraum gemittelten Überschreitung eines vorgegebenen Grenzwerts einer gemessenen Verformung des Rotorblatts 2 der Aktor 6 das Rotorblatt 2 so eingestellt, dass das Rotorblatt 2 weniger belastet wird. Im Extremfall kann der Aktor 6 das Rotorblatt 2 so einstellen, dass das Rotorblatt 2 in die Fahnenstellung bewegt wird.

Wie oben dargelegt, können außerdem die Blattwinkel 48 der Rotorblätter 2 von der Steuerungseinrichtung 4 individuell unter Ansprechen auf die gemessene Verformung so eingestellt werden, dass die Verformung während des Umlaufs des Rotorblatts 2 möglichst gleichmäßig bleibt. Diese Verstellung kann insbesondere auch zusätzlich zu einer üblichen Verstellung in Abhängigkeit von der gemessenen Windgeschwindigkeit 49 erfolgen.

Fig. 5 zeigt dazu ein Diagramm, in welchem der Blattwinkel 48 als Funktion der Windgeschwindigkeit in Metern pro Sekunde aufgetragen ist. Die Windgeschwindigkeit kann mit einem zusätzlichen Anemometer, beispielsweise an der Gondel 7, gemessenen werden. Bei einem sehr leichten Wind bis etwa vier Metern pro Sekunde bleibt die Windkraftanlage ausgeschaltet. Dazu werden die Rotorblätter 2 in die Fahnenstellung gebracht, was in dem in Fig. 5 dargestellten Beispiel einem Blattwinkel 48 von etwa 85° entspricht. Bei höheren Windgeschwindigkeiten 49 wird der Blatiwinkef 48 auf einen kleinen Winkel gestellt, der nach dem Kennfeld der Windkraftanlage für diesen Bereich optimal ist. Wird die Nennleistung der Windkraftanlage erreicht, so wird durch sukzessive Vergrößerung des Blattwinkels 48, beziehungsweise entsprechend durch Verkleinerung des
Anstellwinkels 46 mit weiter steigender Windgeschwindigkeit der Auftrieb reduziert, so dass die Drehzahl konstant und die Leistung auf der Nennleistung gehalten wird.

Bei dem in Fig. 5 gezeigten Beispiel wird die Nennleistung bei einem typischen Wert von etwa 11 Metern pro Sekunde Windgeschwindigkeit 49 erreicht. Wie anhand von Fig. 5 zu erkennen ist, wird im Bereich höherer Windgeschwindigkeiten 49 der Blattwinkel 48 mit ansteigender Windgeschwindigkeit 49 erhöht. Damit wird der Auftrieb des Rotorblatts 2 emiedrigt, so dass der Rotorblatts 2 konstant auf einer vorbestimmten Umdrehungszahl gehalten wird und die Windkraftanlage mit ihrer Nennleistung arbeitet. Wird die Windgeschwindigkeit 49 allerdings zu groß, so wird diese aus Sicherheitsgründen abgeschaltet. Dies ist bei dem in Fig. 5 gezeigten Beispiel bei einer Windgeschwindigkeit 49 von etwa 24 Metern pro Sekunde der Fall.

Nun kann mittels der Erfindung zusätzlich die Verformung der Rotorblätter 2 gemessen und zur Regelung der momentanen Rotorblattstellung verwendet werden. Damit wird sowohl eine Belastungen der Rotorblätter 2 als auch das Drehmomente auf der Achse des Rotors reduziert.
Hierzu wird ein Sollwert der Verformung bereitgestellt oder ermittelt.

Die Steuerungseinrichtung 4 steuert bei einer Verformung der Rotorblätter 2, die geringer ist als der bereitgestellte oder ermittelte Sollwert den Aktor 6. Der durch den Aktor 6 geänderte Blattwinkel 48 der Rotorblätter 2 erzeugt hierbei eine höhere Windlast.

Die Steuerungseinrichtung 4 steuert bei einer Verformung der Rotorblätter 2, die größer ist als der bereitgestellte oder ermittelte Sollwert den Aktor 6 Der durch den Aktor 6 geänderte Blattwinkel 48 der Rotorblätter 2 erzeugt hierbei eine geringere Windlast.

Durch die vorteilhafte Steuerung der Rotorblätter 2 kann die Belastung reduziert werden und zudem kann so gegebenenfalls der zulässige Betriebsbereich bis über die in Fig. 5 beispielhaft dargestellte Grenze der Windgeschwindigkeit 49 von 24 Metern pro Sekunde hinaus erweitert werden.

Ferner ergibt sich auch eine bessere Ausnutzung der Windenergie unterhalb der Windgeschwindigkeit 49, bei welcher ansonsten die Nennleistung erreicht wird, also bei dem in Fig. 5 gezeigten Beispiel bei einer Windgeschwindigkeit 49 von 11 Metern pro Sekunde.

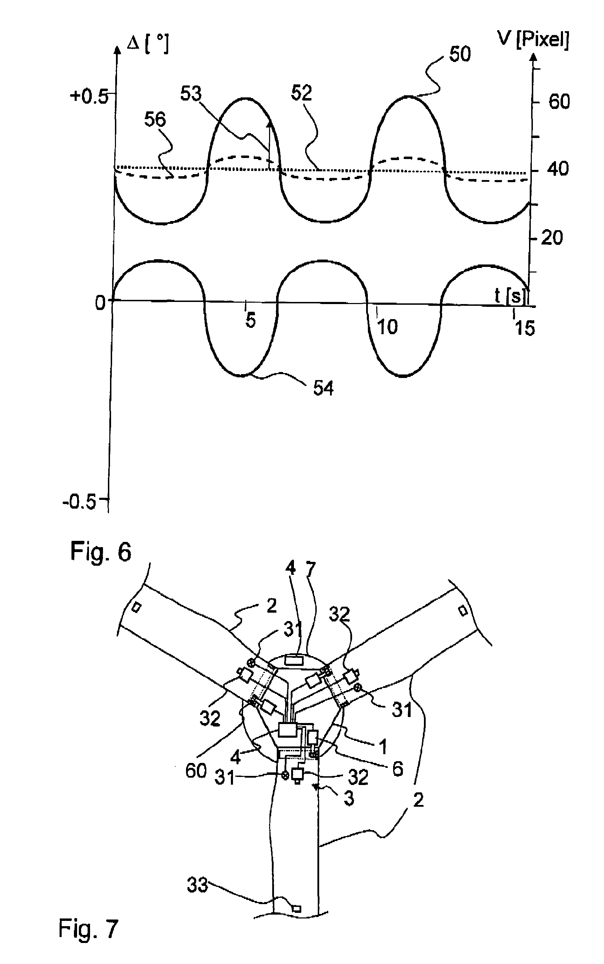

In Fig. 6 ist schematisch anhand eines Diagramms ein Beispiel des zeitlichen Ablaufs einer Blattwinkelsteuerung 5 dargestellt. Auf der Abszisse ist die Zeit dargestellt. Die Kurve 50 stellt die von der Messeinrichtung 3 erfasste Verschiebung des Reflexionsmittels 33 dar und ergibt damit ein Maß für die Verformung. Bei dem in Fig. 6 gezeigten Beispiel ist dabei die Verschiebung des Reflexionsmittels 33 in Pixel angegeben (rechte Ordinate des Diagramms). Demgemäß gibt dieses Maß wieder, über welche Anzahl von Pixel einer Empfangseinheit 32, insbesondere eines CCD- oder CMOS-Matrixsensor hinweg, sich das Bild der Markierung oder dessen Schwerpunkt von einer Referenzposition aufgrund der Verformung wegbewegt. Vorzugsweise kann dabei die Referenzposition die Position der Markierung bei einem nicht deformierten Rotorblatt 2 sein.

Die momentane Verschiebung 50 weist entsprechend der Kreisbewegung des Rotorblattes 2 einen periodischen Verlauf auf. Ist das Rotorblatt 2 am höchsten Punkt der Kreisbahn, ergibt sich entsprechend der mit der Höhe ansteigenden Windgeschwindigkeit 49 die höchste Windlast und damit auch die größte Verformung. Die Periodizität von etwa 6 Sekunden entspricht einer typischen Drehzahl von großen Windkraftanlagen.

Da im Betrieb der Windkraftanlage dauernd eine Windlast anliegt, ist der zeitliche Mittelwert 52 der Verschiebung von der Referenzposition, welcher im Diagramm eine Verschiebung von 0 Pixel zugeordnet wurde, verschieden und liegt bei dem dargestellten Beispiel bei etwa 40 Pixel. Die während des Umlaufs variierende Windlast führt dann zu der momentanen Differenz 53 der Verschiebung zu deren Mittelwert 52. Die Wirkung der Schwerkraft wurde in Fig. 6 vereinfacht nicht dargestellt.

Die Verwendung eines Matrixsensors als Empfangseinheit 32 ermöglicht es hier, sehr genaue Verschiebungen zu messen, da eine Mittelung oder Schwerpunktsbestimmung über alle Pixel hinweg, auf welchen die Markierung abgebildet wird, durchgeführt werden kann.

Die Pixel können in einfacher Weise durch eine Auswertung der Bildhelligkeit dem Abbild des Reflexionsmittels 33 zugeordnet werden. Für eine Schwerpunkts- oder allgemeiner eine Lagebestimmung ist dabei nicht einmal eine absolut scharfe Abbildung auf der Empfangseinheit 32 der Messeinrichtung 3 erforderlich. Da sich die Abbildung auf eine Vielzahl von Pixel erstreckt, kann auch die Position der Abbildung des Reflexionsmittels 33 genauer als die Dimension des Pixelabstands bestimmt werden.

Auf der linken Ordinate ist die Änderung □ des Blattwinkels 48 gegenüber dem Mittelwert des Blattwinkels 48 angegeben. Der Verlauf dieser Änderung, wie er von der Steuerungseinrichtung 4 über den Aktor 6 erfolgt, ist als Kurve 54 dargestellt. Wie anhand der Kurvenverläufe ersichtlich, wird der Blattwinkel 48 bei niedrigerer Verformung, beziehungsweise kleinerer Verschiebung durch die Steuerungseinrichtung 4 größer eingestelk, und umgekehrt.

Dies führt andererseits dazu, dass eine Differenz 53 bei der erfindungsgemäßen Blattwinkelsteuerung 5 kleiner wird. Damit ergibt sich ein zeitlicher Verlauf der Verschiebung des Bildes des Reflexionsmittels 33, welche deutlich weniger Schwankungen um den Mittelwert aufweist. Diese Kurve 56 ist als gestrichelte Linie in Figur 6 eingezeichnet.

Der Mittelwert des Blattwinkels 48 kann anhand einer Kennlinie, beispielsweise aus einer Kennlinie, wie sie Fig. 5 darstellt ist, bestimmt werden. Damit wird dann die erfindungsgemäße individuelle Blattwinkelsteuerung 5 einer weiteren Blattwinkelsteuerung 5 überlagert. Diese weitere Blattwinkelsteuerung 5 kann wie gesagt abhängig von der Windgeschwindigkeit 49 erfolgen. Alternativ oder zusätzlich können auch andere Parameter, wie eine Rotordrehzahl hinzugezogen werden.

In Weiterbildung der Erfindung ist die Steuerungseinrichtung 4 daher allgemein dazu eingerichtet, zusätzlich zur von der Messeinrichtung erfassten Verformung den Blattwinkel 48 unter Ansprechen auf zumindest einen weiteren Parameter einzustellen. Der oder diese Parameter können wie gesagt insbesondere die von einem Anemometer erfasste Windgeschwindigkeit 49 und/oder die Rotordrehzahl sein. Es ist aber auch möglich, den günstigsten Blattwinkel 48 nur aufgrund der gemessenen Verformung einzustellen.

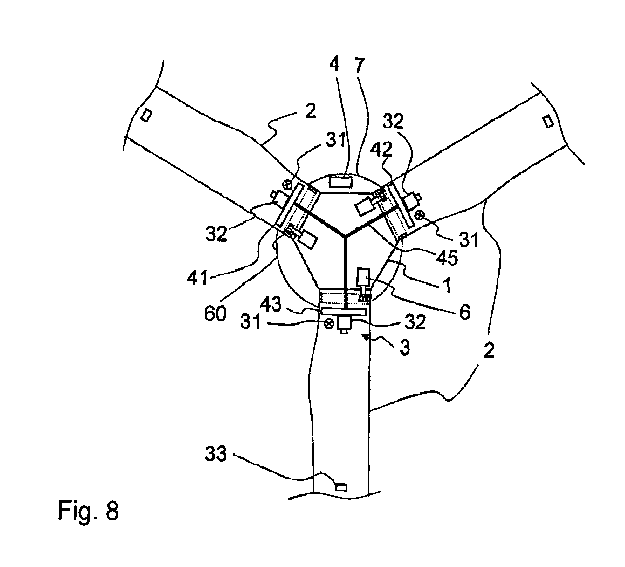

Für die Anordnung und Verschaltung der Steuerungseinrichtung 4 gibt es verschiedene Möglichkeiten, von denen nachfolgend anhand der Fig. 7 und 8 einige Möglichkeiten erläutert werden. In den Figuren 7 und 8 ist jeweils die Windkraftanlage in Draufsicht auf die Rotorachse dargestellt.

Für jedes Rotorblatt 2 ist ein Aktor 6 in Gestalt eines Stellmotors vorgesehen. Die Rotorblätter 2 sind um ihre Längsachse drehbar gelagert an der Nabe 1 befestigt
und weisen einen Zahnkranz 60 auf. Der in der Nabe angeordnete Stellmotor greift mit einem Zahnrad in den Zahnkranz 60 ein und kann somit das Rotorblatt 2 um die Längsachse in einen vorgesehenen Blatlwinkel 48 drehen. Jedes der Rotorblätter 2 ist mit einer eigenen Messeinrichtung 3 mit Sendeeinheit 31, Empfangseinheit 32 und einem entlang der Längsachse zur Empfangseinheit 32 beabstandeten Reflexionsmittel 33 versehen. Die Steuerungseinrichtung 4 ist in der Nabe 1 angeordnet. Alle Aktoren 6 und Empfangseinheiten 32 sind an die Steuerungseinrichtung 4 angeschlossen. Im Allgemeinen ist es auch günstig, die Sendeeinheiten 31 mit der Steuerungseinheit 4 anzusteuern. Beispielsweise können auf diese Weise Sende- und Empfangseinheit (31, 32) miteinander synchronisiert werden.

Gemäß dieser Ausführungsform ist also eine gemeinsame Steuerungseinheit 4 vorgesehen, welche die Messwerte der Messeinrichtungen 3 aller Rotorblätter 2 verarbeitet und die Aktoren 6 ansteuert. Damit ergibt sich auch die Möglichkeit, Verformungs-Messwerte von einem Rotorblatt 2 bei der Einstellung des Blattwinkels 48 anderer Rotorblätter 2 zu berücksichtigen. Dies kann unter anderem für eine schnelle Reaktion auf Böen günstig sein. Hier kann der Blattwinkel 48 von der Steuerungseinrichtung 4 vorsorglich auch von den momentan noch nicht von der erhöhten Windgeschwindigkeit 49 einer auftretenden Böe betroffenen Rotorblättern 2 angepasst werden, um die Windlast zu reduzieren.

Alternativ kann die Steuerungseinrichtung 4 auch in der Gondel 7 angeordnet sein. Noch eine Möglichkeit besteht darin, die Steuerungseinrichtung 4 zu verteilen, wobei ein Teil in der Gondel 7, ein weiterer Teil in der Nabe 1 und/oder den Rotorblättern 2 angeordnet ist.

Fig. 8 zeigt eine weitere alternative Ausführungsform des in Fig 7 dargestellten Ausführungsbeispiels. Bei dieser Variante ist in jedem Rotorblatt 2, beziehungsweise allgemeiner für jedes Rotorblatt 2 eine eigene
Steuerungseinrichtung 4 vorgesehen. Diese Steuerungseinrichtungen 4 sind in Fig. 8 zur Unterscheidung mit den Bezugszeichen 41, 42, 43 bezeichnet. In diesem Fall steuert jede Steuerungseinrichtung 41, 42, 43 den Blattwinkel 48 des zugeordneten Rotorblatts 2 auf der Basis der von den jeweiligen Messeinrichtungen 3 gemessenen Verformung. Auch hier können in Weiterbildung aber die Messwerte von den jeweils anderen Rotorblättern 2 berücksichtigt werden, indem die Steuerungseinrichtungen 41,42,43 über eine Datenverbindung 45 miteinander vernetzt werden. Alternativ oder zusätzlich kann auch eine weitere, etwa wieder in der Gondel 7 untergebrachte Steuerungseinrichtung 4 mit den Steuerungseinrichtungen 41, 42, 43 vernetzt werden.

Es ist dem Fachmann ersichtlich, dass die vorstehend anhand der Figuren beschriebenen Ausführungsbeispiele lediglich beispielhaft sind. Insbesondere können die Merkmale der Ausführungsbeispiele auch miteinander kombiniert werden. So können etwa bei dem in Fig. 8 gezeigten Beispiel die Steuerungseinrichtungen 41, 42, 43 ähnlich zu dem in Fig. 7 gezeigten Beispiel auch in der Nabe 1 angeordnet sein.

### Bezugszeichenliste

- 1: Nabe
- 2: Rotorblatt
- 3: Messeinrichtung
- 4,41,42,43: Steuerungseinrichtung
- 5: Blattwinkelsteuerung
- 6: Aktor
- 7: Gondel
- 8: Strahlengang
- 10: Erdboden
- 12: Profil eines Rotorblatts
- 14: Profilsehne
- 16: Profilnase
- 18: Profilhinterkante
- 20: Rotationsebene
- 31: Sendeeinheit
- 32: Empfangseinheit
- 33: Reflexionsmittel
- 35: Windgeschwindigkeitsprofil für eine Rauhigkeitslänge z₀ von 1 Meter
- 36: Windgeschwindigkeitsprofil für eine Rauhigkeitslänge z₀ von 0,005 Metern
- 38, 39, 40: Höhenbereiche
- 42: Windrichtung
- 44: Anströmrichtung
- 45: Datenverbindung
- 46: Anstellwinkel
- 48: Blattwinkel
- 50: zeitlicher Verlauf der Verformung
- 52: Mittelwert
- 53: Differenzwert

- 54: zeitliche Änderung des Blattwinkels
- 56: zeitlicher Verlauf der Verformung nach Regelung des Blattwinkels
- 60: Zahnkranz

## Patentansprüche

1. Blattwinkelsteuerung für ein Rotorblatt einer Windkraftanlage, mit einem Aktor (6) zum Einstellen eines Btattwinkels (48) des Rotorblattes (2), wobei zur Einstellung des Blattwinkels (48) das Rotorblatt (2) mittels des Aktors (6) um seine Längsachse drehbar ist,
einer Messeinrichtung (3) zum Erfassen einer auf das Rotorblatt (2) wirkenden Windlast, sowie
einer Steuerungseinrichtung (4), die mit dem Aktor und der Messeinrichtung (3) verbunden ist,
wobei die Messeinrichtung (3) eine Sende- und Empfangseinheit (31, 32) zum Erfassen einer Verformung des Rotorblattes (2) umfasst und die Steuerungseinrichtung (4) dazu ausgebildet ist, den Aktor (6) in Abhängigkeit von der erfassten Verformung zu steuern.

2. Blattwinkelsteuerung gemäß Anspruch 1, **dadurch gekennzeichnet, dass** die Steuerungseinrichtung (4) dazu eingerichtet ist, den Blattwinkel (48) des Rotorblattes (2) unter Ansprechen auf die erfasste Windlast und / oder einer Rotordrehzahl einzustellen.

3. Blattwinkelsteuerung (5) gemäß Anspruch 1 oder 2, **dadurch gekennzeichnet, dass** die Messeinrichtung (3) dazu ausgebildet ist, die Windlast mehrfach während eines Umlaufs des Rotorblattes (2) zu erfassen, so dass die Windlast in Abhängigkeit von einer Position des Rotorblattes (2) ermittelt wird.

4. Blattwinkelsteuerung gemäß Anspruch 3, **dadurch gekennzeichnet, dass** die Steuerungseinrichtung (4) dazu ausgebildet ist, den Blattwinkel (48) wenigstens eines Rotorblattes (2) in Abhängigkeit von der Position des wenigstens einen Rotorblattes (2) einzustellen.

5. Blattwinkelsteuerung gemäß einem der vorstehenden Ansprüche, **dadurch gekennzeichnet, dass** von der Sendeeinheit (31) Strahlung in Längsrichtung des Rotorblattes (2) aussendbar ist und die Empfangseinheit (32) als eine abbildende, ortsauflösende Empfangseinheit (32) ausgeführt ist.

6. Blattwinkelsteuerung gemäß Anspruch 5, **dadurch gekennzeichnet, dass** ein am oder im Rotorblatt (2) befestigtes, von der Sendeeinheit (31) beabstandetes Reflektionsmittel (44) in Form einer die Strahlung reflektierenden Markierung vorgesehen ist, wobei die Strahlung ausgehend von der Sendeeinheit (31) einem Strahlengang (8) folgend von dem Reflektionsmittel (33) zu der Empfangseinheit (32) reflektierbar ist der Strahlengang (8) bei einer Verformung des Rotorblattes (2) verändert wird, mittels der Empfangseinheit (32) die Veränderung des Strahlengangs (8) anhand der Änderung der Position der Abbildung in der Empfangseinheit (32) detektierbar und ein Messwert daraus ableitbar ist, und der Messwert von der Messeinrichtung (3) und / oder der Steuerungseinrichtung (4) als ein Maß für die Bestimmung der Verformung des Rotorblattes (2) auswertbar ist.

7. Blattwinkelsteuerung gemäß Anspruch 6, **dadurch gekennzeichnet, dass** Reflektionsmittel (33) als ein Retroreflektor ausgeführt ist.

8. Blattwinkelsteuerung nach Anspruch 5, **dadurch gekennzeichnet, dass** mittels der Sendeeinheit (31) die Strahlung gepulst aussendbar ist.

9. Blattwinkelsteuerung nach einem der vorhergehenden Ansprüche, **dadurch gekennzeichnet, dass** mittels der Sendeeinheit (31) optische Strahlung aussendbar ist

10. Blattwinkelsteuerung nach einem der vorhergehenden Ansprüche, **dadurch gekennzeichnet, dass** die Messeinrichtung 3 in der Rotomarbe (1) oder an dem Rotorblatt (2) vorgesehen ist.

11. Blattwinkelsteuerung nach einem der vorhergehenden Ansprüche, **dadurch gekennzeichnet, dass** die Steuerungseinrichtung (4) in der Rotomarbe (1) oder an dem Rotorblatt (2) vorgesehen ist.

12. Blattwinkelsteuerung nach einem der vorhergehenden Ansprüche, **dadurch gekennzeichnet, dass** das Rotorblatt (2) in wenigstens zwei Segmente unterteilt ist und jedes der wenigstens zwei Segmente von wenigstens einem Aktor (6) bewegbar ist, wobei der Aktor (6) zur Einstellung des Blattwinkels von der Steuerungseinrichtung (4) aktivierbar ist.

13. Windkraftanlage mit einer Blattwinkelsteuerung gemäß einem der vorstehenden Ansprüche mit mehreren Rotorblättern (2), wobei jedes der Rotorblätter (2) eine Blattwinkelsteuerung (5) aufweist und der Blattwinkel (48) jedes der Rotorblätter (2) vom jeweiligen Aktor (6) der Blattwinkelsteuerung (5) unter Ansprechen auf eine von der Messeinrichtung (3) des Rotorblatts (2) erfasste Verformung individuell einstellbar ist.

14. Verfahren zur Blattwinkelsteuerung eines Rotorblatts (2) einer Windkraftanlage, bei welcher zur Einstellung des Blattwinkels (48) das Rotorblatt (2) mittels eines Aktors (6) um seine Längsachse drehbar ist, mit den folgenden Schritten:
- eine mit einem Rotor (9) der Windkraftanlage mitrotierende Messeinrichtung (3) erfasst die Verformung des Rotorblattes (2) unter einer einwirkenden Windlast und
- eine Steuerungseinrichtung (4) steuert den Aktor (6) in Abhängigkeit von der erfassten Verformung, so dass der Blattwinkel (48) des Rotorblatts (2) in Abhängigkeit von der einwirkenden Windlast eingestellt wird.

15. Verfahren gemäß dem vorstehenden Anspruch, **dadurch gekennzeichnet, dass** die Verformungen mehrerer jeweils mit eigenen Aktoren (6) ausgestattete Rotorblätter (2) einer Windkraftantage unabhängig voneinander durch mitrotierende Messeinrichtungen (3) erfasst und die Blattwinkel (48) abhängig von der gemessenen Verformung durch die Aktoren (6) eingestellt werden.
